# EUROPEAN PATENT APPLICATION

(11) **EP 4 582 960 A1**
(43) Date of publication of application: **09.07.2025**
(21) Application number: 24204467.5
(22) Date of filing: 03.10.2024
(51) Int. Cl.: G06F 12/0868, G06F 12/1081, G06F 13/38, G06F 3/06, G06F 12/02

(54) **DPU-BASED REMOTE PROCEDURE CALL METHOD, DEVICE, AND STORAGE MEDIUM**

(30) Priority: 08.01.2024 CN 202410021154
(71) Applicant: Beijing Volcano Engine Technology Co., Ltd., Beijing 100190 (CN)
(72) Inventor: CHEN, Chao, Beijing, 100028 (CN); ZHU, Xiaohui, Beijing, 100028 (CN); LIU, Yuanhan, Beijing, 100028 (CN); ZHANG, Yang, Beijing, 100028 (CN)
(74) Representative: Dentons UK and Middle East LLP

(57) **Abstract**

Embodiments of the present disclosure provide a DPU-based remote procedure call method, a device, and a storage medium. In a read/write process of remote procedure call based on a DPU, serialization/deserialization, data compression/decompression, and data copying between a user mode and a kernel mode are not required, a large amount of CPU time in the DPU is saved, the forwarding capability of the DPU for serving an upper layer is significantly improved, single-path read/write delay is reduced, the forwarding capability and the throughput capability of a single core can be effectively improved, and a bottleneck problem caused when the CPU capability of the DPU is limited is also effectively avoided.

## Description

### TECHNICAL FIELD

Embodiments of the present disclosure relate to the field of computer and network communication technologies, and in particular, to a DPU-based remote procedure call method, a device, and a storage medium.

### BACKGROUND

A data processing unit (DPU) is a new-generation processor oriented to data-centric computing. The DPU integrates complete data center functions into a single chip, and together with a CPU and a GPU, constitutes three major pillars of new computing. In current DPU-based virtual machine or elastic bare metal technology, cloud disks/elastic cloud disks are a mainstream choice, and occupy a relatively large proportion of use

When a read/write request for a cloud disk/elastic cloud disk is initiated at a server side (virtual machine instance), interaction with the remote cloud disk needs to be implemented through a DPU. From the perspective of the DPU, it can be understood as calling a read/write disk method of the remote cloud disk based on an RPC (remote procedure call) to meet the read/write requirements on the server side.

The RPC process in the prior art is relatively complex, and when applied to the DPU, CPU time in the DPU is consumed, resulting in read/write delay and a reduction in the forwarding capability of the DPU.

### SUMMARY

Embodiments of the present disclosure provide a DPU-based remote procedure call method, a device, and a storage medium, to improve the forwarding capability of a DPU and reduce the read/write delay.

According to a first aspect, an embodiment of the present disclosure provides a DPU-based remote procedure call method, applied to a data processing unit (DPU), where the method includes:
receiving a data write request sent by a server side to a remote storage side, where the data write request includes data to be written;
obtaining first metadata according to the data write request, where the first metadata includes a target write address of the data to be written;
caching the first metadata and the data to be written in a memory of the DPU, and obtaining memory pointer information of the first metadata and the data to be written in the memory; and
transmitting, according to the memory pointer information, the first metadata and the data to be written to a network port in the DPU in a user mode, and transmitting the first metadata and the data to be written to the remote storage side through the network port, to write to the remote storage side.

According to a second aspect, an embodiment of the present disclosure provides a DPU-based remote procedure call method, applied to a DPU, where the method includes:
receiving a data read request sent by a server side to a remote storage side, and sending the data read request to the remote storage side through a network port in the DPU, where the data read request includes information about data to be read;
receiving, through the network port, a data packet sent by the remote storage side, and caching the data packet in a memory of the DPU, where the data packet includes second metadata and the data to be read, and the second metadata includes information about the server side;
obtaining, in a user mode, memory pointer information of the second metadata and the data to be read in the memory; and
transmitting, according to the memory pointer information, the second metadata and the data to be read to the server side.

According to a third aspect, an embodiment of the present disclosure provides a DPU-based remote procedure call device, including:
a first communication unit, configured to receive a data write request sent by a server side to a remote storage side, where the data write request includes data to be written;
a processing unit, configured to obtain first metadata according to the data write request, where the first metadata includes a target write address of the data to be written; cache the first metadata and the data to be written in a memory of the DPU, and obtain memory pointer information of the first metadata and the data to be written in the memory; and transmit, according to the memory pointer information, the first metadata and the data to be written to a network port in the DPU in a user mode; and
a second communication unit, configured to transmit the first metadata and the data to be written to the remote storage side through the network port, to write the data to the remote storage side.

According to a fourth aspect, an embodiment of the present disclosure provides a DPU-based remote procedure call device, including:
a first communication unit, configured to receive a data read request sent by a server side to a remote storage side, where the data read request includes information about data to be read;
a second communication unit, configured to send the data read request to the remote storage side through a network port in the DPU, and receive, through the network port, a data packet sent by the remote storage side, where the data packet includes second metadata and the data to be read, and the second metadata includes information about the server side;
a processing unit, configured to cache the data packet in a memory of the DPU, and obtain, in a user mode, memory pointer information of the second metadata and the data to be read in the memory; and
the first communication unit is further configured to transmit, according to the memory pointer information, the second metadata and the data to be read to the server side.

According to a fifth aspect, an embodiment of the present disclosure provides an electronic device, including: at least one processor and a memory;
where the memory stores a computer-executable instruction; and
the at least one processor executes the computer-executable instruction stored in the memory, such that the at least one processor executes the DPU-based remote procedure call method according to the first aspect and any one of various possible designs of the first aspect, or the DPU-based remote procedure call method according to the second aspect and any one of various possible designs of the second aspect.

According to a sixth aspect, an embodiment of the present disclosure provides a computer-readable storage medium, where a computer-executable instruction is stored in the computer-readable storage medium, and when a processor executes the computer-executable instruction, the DPU-based remote procedure call method according to the first aspect and any one of various possible designs of the first aspect, or the DPU-based remote procedure call method according to the second aspect and any one of various possible designs of the second aspect is implemented.

According to a seventh aspect, an embodiment of the present disclosure provides a computer program product, including a computer-executable instruction, and when a processor executes the computer-executable instruction, the DPU-based remote procedure call method according to the first aspect and any one of various possible designs of the first aspect, or the DPU-based remote procedure call method according to the second aspect and any one of various possible designs of the second aspect is implemented.

The DPU-based remote procedure call method, the device, and the storage medium provided in the embodiments of the present disclosure do not require serialization and data compression in the data writing process, and also do not require data copying from a user mode to a kernel mode, which saves a large amount of CPU time in the DPU, significantly improves the write request forwarding capability of the DPU for serving an upper layer, reduces single-path read/write delay, the forwarding capability and the throughput capability of a single core can be effectively improved, and also effectively avoids a bottleneck problem caused when the CPU capability of the DPU is limited.

The DPU-based remote procedure call method, the device, and the storage medium provided in the embodiments of the present disclosure do not require data copying from the kernel mode to the user mode in the data reading process, and also do not require data decompression and deserialization, which saves a large amount of CPU time in the DPU, reduces single-path read/write delay, the forwarding capability and the throughput capability of a single core can be effectively improved, and also effectively avoids a bottleneck problem caused when the CPU capability of the DPU is limited.

### BRIEF DESCRIPTION OF THE DRAWINGS

In order to more clearly describe the technical solutions in the embodiments of the present disclosure or in the prior art, the following briefly describes the accompanying drawings used in the description of the embodiments or the prior art. Apparently, the accompanying drawings in the following description show some embodiments of the present disclosure, and a person of ordinary skill in the art may still derive other drawings from these accompanying drawings without creative efforts.
FIG. 1 is a diagram of an example of DPU-based remote procedure call in the prior art.
FIG. 2 is a diagram of an example of DPU-based remote procedure call according to an embodiment of the present disclosure.
FIG. 3 is a schematic flowchart of a DPU-based remote procedure call method according to an embodiment of the present disclosure.
FIG. 4 is a schematic flowchart of a DPU-based remote procedure call method according to another embodiment of the present disclosure.
FIG. 5 is a block diagram of a structure of a DPU-based remote procedure call device according to an embodiment of the present disclosure.
FIG. 6 is a block diagram of a structure of a DPU-based remote procedure call device according to another embodiment of the present disclosure.
FIG. 7 is a schematic diagram of a hardware structure of an electronic device according to an embodiment of the present disclosure.

### DESCRIPTION OF EMBODIMENTS

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

When a read/write request for a cloud disk/elastic cloud disk is initiated at a server side (virtual machine instance), interaction with the remote cloud disk needs to be implemented through a DPU. From the perspective of the DPU, it can be understood as calling a read/write disk method of the remote cloud disk based on an RPC (remote procedure call) to meet the read/write requirements on the server side.

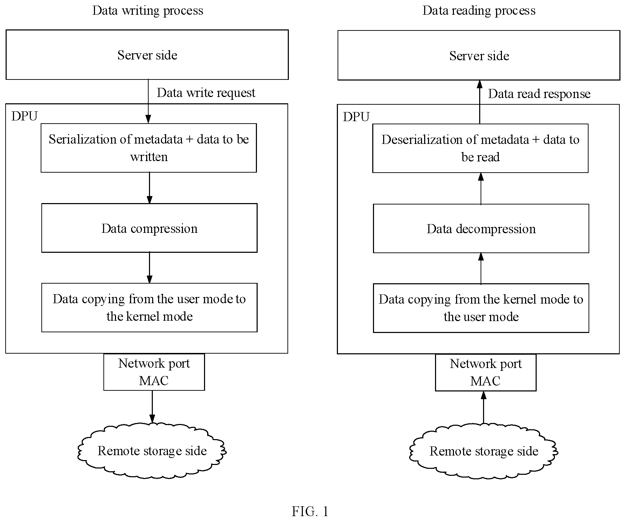

The RPC process in the prior art is relatively complex. In a related technology for reading from and writing to a remote storage side (cloud disk/elastic cloud disk) based on RPC in a DPU, as shown in FIG. 1, in the data writing process, a server side (virtual machine instance) sends a data write request to the DPU for the remote storage side, the data write request includes data to be written, and the DPU obtains metadata and the data to be written, and then serializes the metadata and the data to be written, where the serialization is a process of sorting according to a specific arrangement rule and converting into binary data by using a specific algorithm, and so on, and further compresses the serialized results of the metadata and the data to be written. In addition, because a traditional RPC library is mostly based on a standard POSIX network system call interface of a kernel protocol stack, the serialized results of the metadata and the data to be written need to be copied from a user mode to a kernel mode, and are transmitted to a network port (MAC) of the DPU through the kernel-mode network protocol stack, and then transmitted to the remote storage side by the network port.

In the data reading process, the process is an inverse process of the data writing process. The remote storage side sends metadata and data to be read to the network port (MAC) of the DPU, the network port transmits the metadata and the data to be read to the kernel-mode network protocol stack, the data is copied from the kernel mode to the user mode, and then decompressed and deserialized, and then transmitted to the server side to complete data reading.

In the foregoing process, serialization/deserialization, data compression/data decompression, and copying between the user mode and the kernel mode need to be implemented by a CPU in the DPU, which consumes a large amount of CPU time, resulting in read/write delay and a reduction in the forwarding capability of the DPU. In addition, the CPU performance of the DPU is limited, which may become a bottleneck problem that causes the forwarding capability and the throughput capability of the DPU.

To solve the foregoing technical problems, the present disclosure provides a DPU-based remote procedure call method, expecting to provide an efficient and lightweight RPC call method implemented on a DPU, which may be referred to as high performance light RPC (hRPC) for short, and may reduce the CPU occupation in the DPU as much as possible, so that the forwarding capability and the throughput capability of the DPU can be effectively improved.

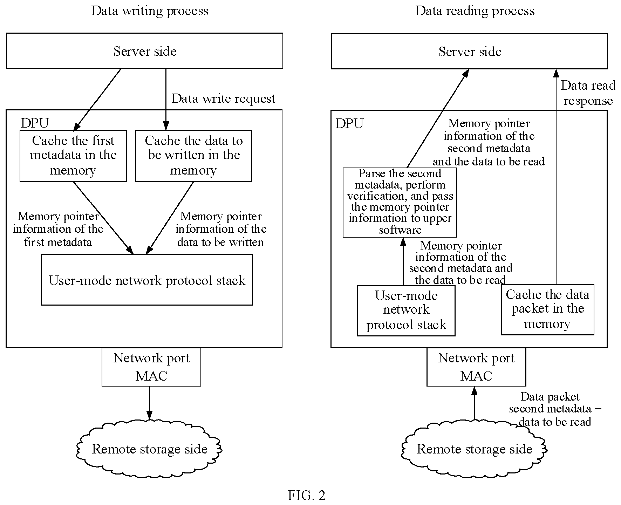

Specifically, as shown in FIG. 2, in the data writing process, a data write request sent by a server side to a remote storage side is received, where the data write request includes data to be written; first metadata is obtained according to the data write request, where the first metadata includes a target write address of the data to be written; the first metadata and the data to be written are cached in a memory of the DPU, and memory pointer information of the first metadata and the data to be written in the memory is obtained; the first metadata and the data to be written are transmitted to a network port in the DPU in a user mode according to the memory pointer information, and the first metadata and the data to be written are transmitted to the remote storage side through the network port, to write to the remote storage side. In the data writing process, serialization and data compression are not required, and data copying from the user mode to the kernel mode is also not required, which saves a large amount of CPU time in the DPU, significantly improves the write request forwarding capability of the DPU for serving an upper layer, reduces single-path read/write delay, can effectively improve the forwarding capability and the throughput capability of a single core, and also effectively avoids a bottleneck problem caused when the CPU capability of the DPU is limited.

In the data reading process, a data read request sent by a server side to a remote storage side is received, and the data read request is sent to the remote storage side through a network port in the DPU, where the data read request includes information about data to be read; a data packet sent by the remote storage side is received through the network port, and the data packet is cached in a memory of the DPU, where the data packet includes second metadata and the data to be read, and the second metadata includes information about the server side; memory pointer information of the second metadata and the data to be read in the memory is obtained in a user mode; and the second metadata and the data to be read are transmitted to the server side according to the memory pointer information. In the data reading process, data copying from the kernel mode to the user mode is not required, and data decompression and deserialization are also not required, which saves a large amount of CPU time in the DPU, reduces single-path read/write delay, can effectively improve the forwarding capability and the throughput capability of a single core, and also effectively avoids a bottleneck problem caused when the CPU capability of the DPU is limited.

The DPU-based remote procedure call method in the present disclosure is described in detail below with reference to specific embodiments.

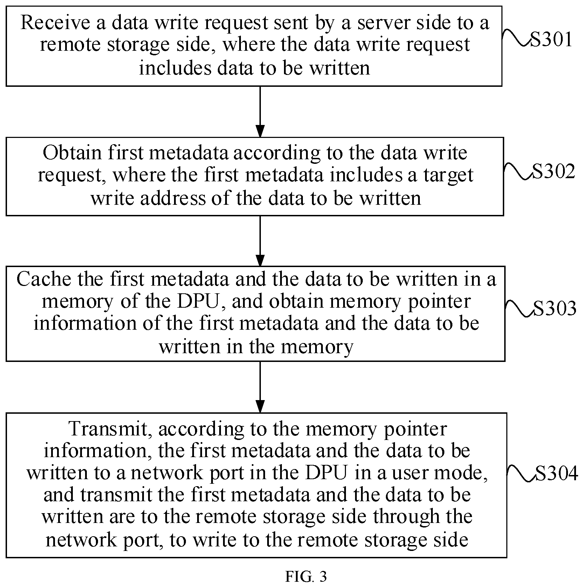

Reference is made to FIG. 3, which is a schematic flowchart of a DPU-based remote procedure call method according to an embodiment of the present disclosure. The method in this embodiment may be applied to a data processing unit (DPU), and the DPU-based remote procedure call method includes the following steps.

S301, receive a data write request sent by a server side to a remote storage side, where the data write request includes data to be written.

In this embodiment, when the server side needs to write data to the remote storage side (such as a cloud disk), the server side may send a data write request to the DPU, to trigger a remote procedure call to write data. The data write request includes but is not limited to the data to be written, and may further include other information, such as a target write address of the data to be written.

Optionally, the DPU and the server side may perform data transmission through hardware such as an FPGA (field programmable gate array) or a DMA (direct memory access). Therefore, in this embodiment, the data write request may be transmitted to the DPU by using the FPGA or the DMA configured on the DPU, or only the data to be written is transmitted to the DPU. Optionally, in this embodiment, it may further be specified that the data to be written is of a preset size. For example, the DPU may be simulated as one (or more) block devices, and both data writing and data reading are performed by using a block or an integer multiple of the block. If the size of one block is 4 KB, the size of the data to be written is 4 KB or an integer multiple of 4 KB.

S302, obtain first metadata according to the data write request, where the first metadata includes a target write address of the data to be written.

In this embodiment, the first metadata may be the same as metadata required in the conventional RPC, and the first metadata includes but is not limited to the target write address of the data to be written, for example, which remote storage side (such as a cloud disk) the data to be written needs to be written to, and a specific location in the remote storage side to which the data to be written is written. The first metadata may be from the server side, for example, may be carried in the data write request, and/or the first metadata may further be from an access side (SDK) of the remote storage side, which is not limited here.

S303, cache the first metadata and the data to be written in a memory of the DPU, and obtain memory pointer information of the first metadata and the data to be written in the memory.

In this embodiment, the first metadata and the data to be written may be separately cached in the memory of the DPU, and the memory pointer information, that is, physical address information, of the first metadata and the data to be written in the memory of the DPU may be obtained.

Optionally, the memory of the DPU in this embodiment may be a huge-page memory (HugePages), and one or more huge-page memories may be allocated to the DPU in advance. The huge-page memory reduces a page table by increasing the size of an operating system page, thereby avoiding a translation lookaside buffer miss.

In this embodiment, the physical address of the first metadata and the data to be written in the huge-page memory may be obtained through a page table of the huge-page memory, and used as the memory pointer information of the first metadata and the data to be written. The page table of the huge-page memory stores a mapping relationship between a virtual memory address and a physical memory address. Therefore, the virtual address of the first metadata and the data to be written may be converted into the physical address of the first metadata and the data to be written through the page table.

S304, transmit, according to the memory pointer information, the first metadata and the data to be written to a network port in the DPU in a user mode, and transmit the first metadata and the data to be written are to the remote storage side through the network port, to write to the remote storage side.

In this embodiment, compared with a process in a conventional RPC in which metadata and data to be written need to be serialized and data compressed, the serialized and compressed metadata and data to be written need to be copied from the user mode to the kernel mode, and then sent to the remote storage side through a network port (MAC) in the DPU, in the hRPC provided in this embodiment, serialization and data compression are not required, and copying from the user mode to the kernel mode is also not required. Instead, the memory pointer information of the first metadata and the data to be written in the memory of the DPU is directly transmitted, and the first metadata and the data to be written are transmitted to the remote storage side through the network port (MAC) in the DPU in the user mode according to the memory pointer information. The foregoing process greatly simplifies the PRC data processing process, reduces the number of times of memory allocation and data copying performed by the CPU (no need to allocate memory for the serialized result and the data compression result, and no need to copy data from the user mode to the kernel mode), avoids the occupation of CPU time in the DPU by serialization and data compression, and avoids the occupation of CPU time in the DPU by data copying from the user mode to the kernel mode. A large amount of CPU time in the DPU is saved, the write request forwarding capability of the DPU for serving an upper layer is significantly improved, single-path read/write delay is reduced, the forwarding capability and the throughput capability of a single core can be effectively improved, and a bottleneck problem caused when the CPU capability of the DPU is limited is also effectively avoided.

Optionally, when the first metadata and the data to be written are transmitted to the network port in the DPU in the user mode according to the memory pointer information, the process may specifically include the following steps.

S3041, transmit the memory pointer information to a user-mode network protocol stack in the DPU.

S3042, transmit, according to the memory pointer information, the first metadata and the data to be written to the network port in the DPU in the user mode based on the user-mode network protocol stack.

In this embodiment, the user-mode network protocol stack for the DPU may be preconfigured. The user-mode network protocol stack in the DPU is a network protocol suite designed to access the memory of the DPU in the user mode according to the memory pointer information, obtain the first metadata and the data to be written in the memory, and transmit the first metadata and the data to be written to the network port. The user-mode network protocol stack stores information such as a function call and a local variable in a program execution process of accessing the memory of the DPU in the user mode according to the memory pointer information, obtaining the first metadata and the data to be written in the memory, and transmitting the first metadata and the data to be written to the network port. Optionally, the hRPC in this embodiment may be applied to a more efficient DPDK interface based on the user-mode network protocol stack. On this basis, only the memory pointer information of the first metadata and the data to be written needs to be transmitted to the user-mode network protocol stack, and then the code of the user-mode network protocol stack may be run to access the memory of the DPU in the user mode, obtain the first metadata and the data to be written in the memory, and transmit the first metadata and the data to be written to the network port, without the need for data copying from the user mode to the kernel mode. This avoids the occupation of CPU time in the DPU by data copying from the user mode to the kernel mode, and avoids the heavy work task of modifying and adapting the conventional heavy RPC.

In the DPU-based remote procedure call method provided in this embodiment, a data write request sent by a server side to a remote storage side is received, where the data write request includes data to be written; first metadata is obtained according to the data write request, where the first metadata includes a target write address of the data to be written; the first metadata and the data to be written are cached in a memory of the DPU, and memory pointer information of the first metadata and the data to be written in the memory is obtained; the first metadata and the data to be written are transmitted to a network port in the DPU in a user mode according to the memory pointer information, and the first metadata and the data to be written are transmitted to the remote storage side through the network port, to write to the remote storage side. In the data writing process, serialization and data compression are not required, and data copying from the user mode to the kernel mode is also not required, which saves a large amount of CPU time in the DPU, significantly improves the write request forwarding capability of the DPU for serving an upper layer, reduces single-path read/write delay, can effectively improve the forwarding capability and the throughput capability of a single core, and also effectively avoids a bottleneck problem caused when the CPU capability of the DPU is limited.

Based on the foregoing embodiment, after the first metadata and the data to be written are transmitted to the remote storage side through the network port, if the DPU receives a write success notification message returned by the remote storage side, the DPU may clear the first metadata and the data to be written from the memory, to release the memory space occupied by the first metadata and the data to be written.

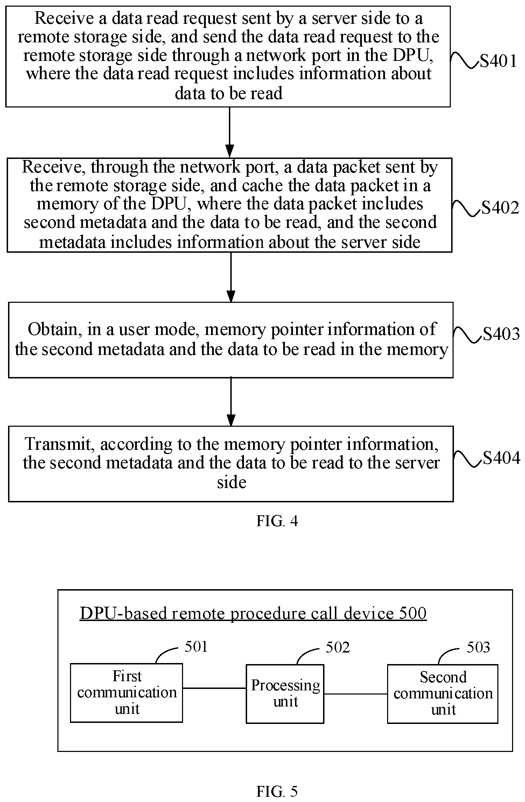

Reference is made to FIG. 4, which is a schematic flowchart of a DPU-based remote procedure call method according to an embodiment of the present disclosure. The method in this embodiment may be applied to a DPU, and the DPU-based remote procedure call method includes the following steps.

S401, receive a data read request sent by a server side to a remote storage side, and send the data read request to the remote storage side through a network port in the DPU, where the data read request includes information about data to be read.

In this embodiment, when the server side needs to read data from the remote storage side (such as a cloud disk), the server side may send a data read request to the DPU, to trigger a remote procedure call to read data. The data read request includes but is not limited to information about the data to be read, such as an identifier of the data to be read, the remote storage side where the data to be read is located, and a specific location in the remote storage side. Further, the DPU may send the data read request to the remote storage side through the network port in the DPU, to request the remote storage side to return the data to be read through the DPU. The specific sending process is not limited in this embodiment, and any feasible sending manner may be used.

S402, receive, through the network port, a data packet sent by the remote storage side, and cache the data packet in a memory of the DPU, where the data packet includes second metadata and the data to be read, and the second metadata includes information about the server side.

In this embodiment, after receiving the data read request, the remote storage side may obtain the second metadata and the data to be read, and send the second metadata and the data to be read to the network port of the DPU in the form of a data packet. The second metadata may include but is not limited to information about the server side (used to identify which server side the data to be read needs to be sent to), and may further include information about the remote storage side (used to identify which remote storage side the data to be read comes from), verification information, and the like. The second metadata may be the same as metadata required in the conventional RPC, which is not limited here.

After the network port of the DPU receives the data packet sent by the remote storage side, the data packet may be cached in the memory of the DPU, or the second metadata and the data to be read in the data packet may be cached in the memory of the DPU.

S403, obtain, in a user mode, memory pointer information of the second metadata and the data to be read in the memory.

In this embodiment, the memory pointer information, that is, physical address information, of the second metadata and the data to be read in the memory is directly obtained in the user mode. In the hRPC provided in this embodiment, it is not required to copy the second metadata and the data to be read from the kernel mode to the user mode, which avoids the occupation of CPU time in the DPU by data copying from the kernel mode to the user mode. In addition, because the data packet sent by the remote storage side directly includes the second metadata and the data to be read, and is cached in the memory, compared with the conventional RPC in which data decompression and deserialization are required, in the hRPC provided in this embodiment, data decompression and deserialization are not required, which greatly simplifies the PRC data processing process, reduces the number of times of memory allocation and data copying performed by the CPU (no need to copy data from the kernel mode to the user mode, and no need to allocate memory for the data decompression result and the deserialization result), avoids the occupation of CPU time in the DPU by data decompression and deserialization, saves a large amount of CPU time in the DPU, significantly improves the read reply forwarding capability of the DPU for serving an upper layer, reduces single-path read/write delay, can effectively improve the forwarding capability and the throughput capability of a single core, and also effectively avoids a bottleneck problem caused when the CPU capability of the DPU is limited.

Optionally, the memory pointer information of the second metadata and the data to be read in the memory may be obtained from the data packet through a user-mode network protocol stack in the DPU. The user-mode network protocol stack in the DPU is preconfigured in the DPU, and stores information such as a function call and a local variable in a program execution process of obtaining the memory pointer information, in the memory, of the second metadata and the data to be read included in the data packet when the network port receives the data packet sent by the remote storage side and caches the data packet in the memory.

Optionally, the memory of the DPU in this embodiment may be a huge-page memory, and the physical address of the second metadata and the data to be read in the huge-page memory may be obtained through a page table of the huge-page memory, and used as the memory pointer information of the second metadata and the data to be read.

S404, transmit, according to the memory pointer information, the second metadata and the data to be read to the server side.

In this embodiment, the memory of the DPU may be accessed according to the memory pointer information of the second metadata and the data to be read, and the second metadata and the data to be read are obtained and transmitted to the server side, to implement data reading by the server side.

Optionally, when the second metadata and the data to be read are transmitted to the server side according to the memory pointer information, the process may specifically include the following steps.

S4041, parse the second metadata according to the memory pointer information, to obtain the information about the server side.

S4042, perform verification according to the information about the server side, transmit, according to the memory pointer information, the second metadata and the data to be read to the server side after the verification is passed.

In this embodiment, the second metadata may be read according to the memory pointer information of the second metadata and parsed to obtain information included in the second metadata, such as information about the server side (used to identify which server side the data to be read needs to be sent to), information about the remote storage side (used to identify which remote storage side the data to be read comes from), verification information, and the like. Then verification may be performed according to the information. For example, it is verified whether the current server side matches the server side information in the second metadata, whether the remote storage side is the remote storage side to be read, whether the data to be read is the required data, whether the data to be read is complete, and the like. The specific verification process is not described herein again. After the verification is passed, the second metadata and the data to be read may be transmitted to the server side according to the memory pointer information of the second metadata and the data to be read, or alternatively, only the data to be read may be transmitted to the server side according to the memory pointer information of the data to be read.

Optionally, the DPU may transmit the second metadata and the data to be read to the server side through hardware such as an FPGA or a DMA.

In The DPU-based remote procedure call method provided in this embodiment, a data read request sent by a server side to a remote storage side is received, and the data read request is sent to the remote storage side through a network port in the DPU, where the data read request includes information about data to be read; a data packet sent by the remote storage side is received through the network port, and the data packet is cached in a memory of the DPU, where the data packet includes second metadata and the data to be read, and the second metadata includes information about the server side; memory pointer information of the second metadata and the data to be read in the memory is obtained in a user mode; and the second metadata and the data to be read are transmitted to the server side according to the memory pointer information. In the data reading process, data copying from the kernel mode to the user mode is not required, and data decompression and deserialization are also not required, which saves a large amount of CPU time in the DPU, reduces single-path read/write delay, can effectively improve the forwarding capability and the throughput capability of a single core, and also effectively avoids a bottleneck problem caused when the CPU capability of the DPU is limited.

Based on the foregoing embodiment, after the second metadata and the data to be read are transmitted to the server side according to the memory pointer information, if a read success notification message from the server side is received, the data packet (the second metadata and the data to be read) may be cleared from the memory of the DPU to release the occupied memory space.

Corresponding to the DPU-based remote procedure call method for the data writing process in the foregoing embodiments, FIG. 5 is a block diagram of a structure of a DPU-based remote procedure call device according to an embodiment of the present disclosure. For ease of description, only parts related to the embodiments of the present disclosure are shown. Referring to FIG. 5, the DPU-based remote procedure call device 500 includes a first communication unit 501, a processing unit 502, and a second communication unit 503.

The first communication unit 501 is configured to receive a data write request sent by a server side to a remote storage side, where the data write request includes data to be written.

The processing unit 502 is configured to obtain first metadata according to the data write request, where the first metadata includes a target write address of the data to be written; cache the first metadata and the data to be written in a memory of the DPU, and obtain memory pointer information of the first metadata and the data to be written in the memory; and transmit, according to the memory pointer information, the first metadata and the data to be written to a network port in the DPU in a user mode.

The second communication unit 503 is configured to transmit the first metadata and the data to be written to the remote storage side through the network port, to write to the remote storage side.

In one or more embodiments of the present disclosure, when transmitting, according to the memory pointer information, the first metadata and the data to be written to the network port in the DPU in the user mode, the processing unit 502 is configured to:
transmit the memory pointer information to a user-mode network protocol stack in the DPU; and
transmit, according to the memory pointer information, the first metadata and the data to be written to the network port in the DPU in the user mode based on the user-mode network protocol stack.

In one or more embodiments of the present disclosure, the memory of the DPU is a huge-page memory, and when obtaining the memory pointer information of the first metadata and the data to be written in the memory, the processing unit 502 is configured to:
obtain, through a page table of the huge-page memory, a physical address of the first metadata and the data to be written in the huge-page memory, and determine the physical address in the huge-page memory as the memory pointer information.

In one or more embodiments of the present disclosure, the second communication unit 503 is further configured to receive a write success notification message from the remote storage side; and the processing unit 502 is further configured to clear the first metadata and the data to be written from the memory.

The DPU-based remote procedure call device 500 provided in this embodiment may be configured to perform the technical solution of the method embodiment described above. The implementation principle and technical effect therebetween are similar, and are not described herein again in this embodiment.

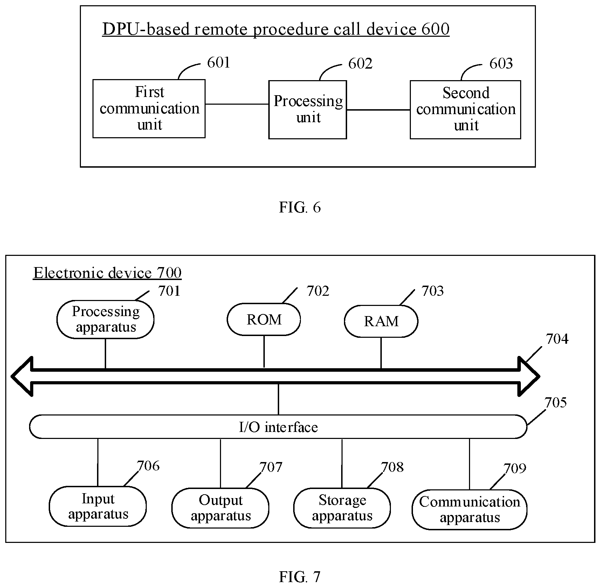

Corresponding to the DPU-based remote procedure call method for the data reading process in the foregoing embodiments, FIG. 6 is a block diagram of a structure of a DPU-based remote procedure call device according to an embodiment of the present disclosure. For ease of description, only parts related to the embodiments of the present disclosure are shown. Referring to FIG. 6, the DPU-based remote procedure call device 600 includes a first communication unit 601, a second communication unit 603, and a processing unit 602.

The first communication unit 601 is configured to receive a data read request sent by a server side to a remote storage side, where the data read request includes information about data to be read.

The second communication unit 603 is configured to send the data read request to the remote storage side through a network port in the DPU, and receive a data packet sent by the remote storage side through the network port, where the data packet includes second metadata and the data to be read, and the second metadata includes information about the server side.

The processing unit 602 is configured to cache the data packet in a memory of the DPU, and obtain, in a user mode, memory pointer information of the second metadata and the data to be read in the memory.

The first communication unit 601 is further configured to transmit, according to the memory pointer information, the second metadata and the data to be read to the server side.

In one or more embodiments of the present disclosure, the processing unit 602 is further configured to parse the second metadata according to the memory pointer information to obtain the information about the server side, and perform verification according to the information about the server side; and
the first communication unit 601 is further configured to transmit, according to the memory pointer information, the second metadata and the data to be read to the server side after the verification is passed.

In one or more embodiments of the present disclosure, when obtaining, in the user mode, the memory pointer information of the second metadata and the data to be read in the memory, the processing unit 602 is configured to:
obtain, through a user-mode network protocol stack in the DPU, the memory pointer information of the second metadata and the data to be read in the memory from the data packet.

In one or more embodiments of the present disclosure, the memory of the DPU is a huge-page memory, and when obtaining, in the user mode, the memory pointer information of the second metadata and the data to be read in the memory, the processing unit 602 is configured to:
obtain, through a page table of the huge-page memory, a physical address of the second metadata and the data to be read in the huge-page memory, and determine the physical address in the huge-page memory as the memory pointer information.

In one or more embodiments of the present disclosure, the first communication unit 601 is further configured to receive a read success notification message from the server side; and
the processing unit 602 is further configured to clear the data packet from the memory.

The DPU-based remote procedure call device 600 provided in this embodiment may be configured to perform the technical solution of the method embodiment described above. The implementation principle and technical effect therebetween are similar, and are not described herein again in this embodiment. It should be noted that the DPU-based remote procedure call device 600 may be the same device as the DPU-based remote procedure call device 500.

Reference is made to FIG. 7, which is a schematic diagram of a structure of an electronic device 700 suitable for implementing an embodiment of the present disclosure. The electronic device 700 may be a terminal device or a server. The terminal device may include, but is not limited to, mobile terminals such as a mobile phone, a notebook computer, a digital broadcast receiver, a personal digital assistant (PDA), a portable android device (PAD), a portable media player (PMP), and a vehicle-mounted terminal (such as a vehicle navigation terminal), and fixed terminals such as a digital TV and a desktop computer. The electronic device shown in FIG. 7 is merely an example, and should not impose any limitation on the function and scope of use of the embodiments of the present disclosure.

As shown in FIG. 7, the electronic device 700 may include a processing apparatus (such as a central processor, a graphics processor, etc.) 701 that may perform various appropriate actions and processing in accordance with a program stored in a read only memory (ROM) 702 or a program loaded from a storage apparatus 708 into a random access memory (RAM) 703. The RAM 703 further stores various programs and data required for the operation of the electronic device 700. The processing apparatus 701, the ROM 702, and the RAM 703 are connected to each other through a bus 704. An input/output (I/O) interface 705 is also connected to the bus 704.

Generally, the following apparatuses may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; a storage apparatus 708 including, for example, a tape and a hard disk; and a communication apparatus 709. The communication apparatus 709 may allow the electronic device 700 to perform wireless or wired communication with other devices to exchange data. Although FIG. 7 shows the electronic device 700 having various apparatuses, it should be understood that it is not required to implement or have all of the shown apparatuses. It may be an alternative to implement or have more or fewer apparatuses.

In particular, according to an embodiment of the present disclosure, the processes described above with reference to the flowcharts may be implemented as computer software programs. For example, this embodiment of the present disclosure includes a computer program product, which includes a computer program carried on a computer-readable medium, where the computer program includes program code for performing the method shown in the flowchart. In such an embodiment, the computer program may be downloaded from a network through the communication apparatus 709 and installed, installed from the storage apparatus 708, or installed from the ROM 702. When the computer program is executed by the processing apparatus 701, the above-mentioned functions defined in the method of the embodiment of the present disclosure are performed.

It should be noted that the above-mentioned computer-readable medium in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program code contained in the computer-readable medium may be transmitted by any suitable medium, including but not limited to electric wires, optical cables, radio frequency (RF), etc., or any suitable combination thereof.

The above-mentioned computer-readable medium may be contained in the above-mentioned electronic device; or may exist independently without being assembled into the electronic device.

The above-mentioned computer-readable medium carries one or more programs, and when the one or more programs are executed by the electronic device, the electronic device is enabled to perform the method shown in the above-mentioned embodiment.

The computer program code for performing the operations of the present disclosure may be written in one or more programming languages or a combination thereof, where the programming languages include an object-oriented programming language such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any type of network, including a local area network (LAN) or a wide area network (WAN), or may be connected to an external computer (for example, connected through the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be executed substantially in parallel, or they can sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the description of the embodiments of the present disclosure may be implemented by means of software, or may be implemented by means of hardware. The name of a unit does not constitute a limitation on the unit itself in some cases. For example, a first obtaining unit may also be described as "a unit for obtaining at least two Internet Protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to a first aspect, one or more embodiments of the present disclosure provide a DPU-based remote procedure call method applied to a data processing unit (DPU), where the method includes:
receiving a data write request sent by a server side to a remote storage side, where the data write request includes data to be written;
obtaining first metadata according to the data write request, where the first metadata includes a target write address of the data to be written;
caching the first metadata and the data to be written in a memory of the DPU, and obtaining memory pointer information of the first metadata and the data to be written in the memory; and
transmitting, according to the memory pointer information, the first metadata and the data to be written to a network port in the DPU in a user mode, and transmitting the first metadata and the data to be written to the remote storage side through the network port, to write to the remote storage side.

According to one or more embodiments of the present disclosure, the transmitting, according to the memory pointer information, the first metadata and the data to be written to the network port in the DPU in the user mode includes:
transmitting the memory pointer information to a user-mode network protocol stack in the DPU; and
transmitting, according to the memory pointer information, the first metadata and the data to be written to the network port in the DPU in the user mode based on the user-mode network protocol stack.

According to one or more embodiments of the present disclosure, the memory of the DPU is a huge-page memory, and the obtaining the memory pointer information of the first metadata and the data to be written in the memory includes:
obtaining, through a page table of the huge-page memory, a physical address of the first metadata and the data to be written in the huge-page memory, and determining the physical address in the huge-page memory as the memory pointer information.

According to one or more embodiments of the present disclosure, after the transmitting the first metadata and the data to be written to the remote storage side through the network port, the method further includes:
receiving a write success notification message from the remote storage side, and clearing the first metadata and the data to be written from the memory.

According to a second aspect, one or more embodiments of the present disclosure provide a DPU-based remote procedure call method applied to a data processing unit (DPU), where the method includes:
receiving a data read request sent by a server side to a remote storage side, and sending the data read request to the remote storage side through a network port in the DPU, where the data read request includes information about data to be read;
receiving, through the network port, a data packet sent by the remote storage side, and caching the data packet in a memory of the DPU, where the data packet includes second metadata and the data to be read, and the second metadata includes information about the server side;
obtaining, in a user mode, memory pointer information of the second metadata and the data to be read in the memory; and
transmitting, according to the memory pointer information, the second metadata and the data to be read to the server side.

According to one or more embodiments of the present disclosure, the transmitting, according to the memory pointer information, the second metadata and the data to be read to the server side includes:
parsing the second metadata according to the memory pointer information to obtain the information about the server side; and
performing verification according to the information about the server side, and transmitting, according to the memory pointer information, the second metadata and the data to be read to the server side after the verification is passed.

According to one or more embodiments of the present disclosure, the obtaining, in the user mode, memory pointer information of the second metadata and the data to be read in the memory includes:
obtaining, through a user-mode network protocol stack in the DPU, the memory pointer information of the second metadata and the data to be read in the memory from the data packet.

According to one or more embodiments of the present disclosure, the memory of the DPU is a huge-page memory, and the obtaining, in the user mode, the memory pointer information of the second metadata and the data to be read in the memory includes:
obtaining, through a page table of the huge-page memory, a physical address of the second metadata and the data to be read in the huge-page memory, and determining the physical address in the huge-page memory as the memory pointer information.

According to one or more embodiments of the present disclosure, after the transmitting, according to the memory pointer information, the second metadata and the data to be read to the server side, the method further includes:
receiving a read success notification message from the server side, and clearing the data packet from the memory.

According to a third aspect, one or more embodiments of the present disclosure provide a DPU-based remote procedure call device, including:
a first communication unit, configured to receive a data write request sent by a server side to a remote storage side, where the data write request includes data to be written;
a processing unit, configured to obtain first metadata according to the data write request, where the first metadata includes a target write address of the data to be written; cache the first metadata and the data to be written in a memory of the DPU, and obtain memory pointer information of the first metadata and the data to be written in the memory; and transmit, according to the memory pointer information, the first metadata and the data to be written to a network port in the DPU in a user mode; and
a second communication unit, configured to transmit the first metadata and the data to be written to the remote storage side through the network port, to write to the remote storage side.

According to one or more embodiments of the present disclosure, when transmitting, according to the memory pointer information, the first metadata and the data to be written to the network port in the DPU in the user mode, the processing unit is configured to:
transmit the memory pointer information to a user-mode network protocol stack in the DPU; and
transmit, according to the memory pointer information, the first metadata and the data to be written to the network port in the DPU in the user mode based on the user-mode network protocol stack.

According to one or more embodiments of the present disclosure, the memory of the DPU is a huge-page memory, and when obtaining the memory pointer information of the first metadata and the data to be written in the memory, the processing unit is configured to:
obtain, through a page table of the huge-page memory, a physical address of the first metadata and the data to be written in the huge-page memory, and determine the physical address in the huge-page memory as the memory pointer information.

In one or more embodiments of the present disclosure, the second communication unit is further configured to receive a write success notification message from the remote storage side; and the processing unit is further configured to clear the first metadata and the data to be written from the memory.

According to a fourth aspect, one or more embodiments of the present disclosure provide a DPU-based remote procedure call device, including:
a first communication unit, configured to receive a data read request sent by a server side to a remote storage side, where the data read request includes information about data to be read;
a second communication unit, configured to send the data read request to the remote storage side through a network port in the DPU, and receive, through the network port, a data packet sent by the remote storage side, where the data packet includes second metadata and the data to be read, and the second metadata includes information about the server side;
a processing unit, configured to cache the data packet in a memory of the DPU, and obtain, in a user mode, memory pointer information of the second metadata and the data to be read in the memory; and
the first communication unit is further configured to transmit, according to the memory pointer information, the second metadata and the data to be read to the server side.

According to one or more embodiments of the present disclosure, the processing unit is further configured to parse the second metadata according to the memory pointer information to obtain the information about the server side, and perform verification according to the information about the server side; and
the first communication unit is further configured to transmit, according to the memory pointer information, the second metadata and the data to be read to the server side after the verification is passed.

According to one or more embodiments of the present disclosure, when obtaining the memory pointer information of the second metadata and the data to be read in the memory in the user mode, the processing unit is configured to:
obtain, through a user-mode network protocol stack in the DPU, the memory pointer information of the second metadata and the data to be read in the memory from the data packet.

According to one or more embodiments of the present disclosure, the memory of the DPU is a huge-page memory, and when obtaining the memory pointer information of the second metadata and the data to be read in the memory in the user mode, the processing unit is configured to:
obtain, through a page table of the huge-page memory, a physical address of the second metadata and the data to be read in the huge-page memory, and determine the physical address in the huge-page memory as the memory pointer information.

According to one or more embodiments of the present disclosure, the first communication unit is further configured to receive a read success notification message from the server side; and
the processing unit is further configured to clear the data packet from the memory.

According to a fifth aspect, one or more embodiments of the present disclosure provide an electronic device, including: at least one processor and a memory;
the memory stores computer-executable instructions; and
the at least one processor executes the computer-executable instructions stored in the memory, to enable the at least one processor to execute the DPU-based remote procedure call method described in the first aspect and various possible designs of the first aspect, or the DPU-based remote procedure call method described in the second aspect and various possible designs of the second aspect.

According to a sixth aspect, one or more embodiments of the present disclosure provide a computer-readable storage medium having computer-executable instructions stored therein. When a processor executes the computer-executable instructions, the DPU-based remote procedure call method described in the first aspect and various possible designs of the first aspect, or the DPU-based remote procedure call method described in the second aspect and various possible designs of the second aspect is implemented.

According to a seventh aspect, one or more embodiments of the present disclosure provide a computer program product including computer-executable instructions. When a processor executes the computer-executable instructions, the DPU-based remote procedure call method described in the first aspect and various possible designs of the first aspect, or the DPU-based remote procedure call method described in the second aspect and various possible designs of the second aspect is implemented.

The foregoing descriptions are merely preferred embodiments of the present disclosure and explanations of the applied technical principles. A person skilled in the art should understand that the scope of disclosure involved in the present disclosure is not limited to the technical solution formed by a specific combination of the foregoing technical features, and shall also cover other technical solutions formed by any combination of the foregoing technical features or equivalent features thereof without departing from the foregoing concept of disclosure. For example, a technical solution formed by replacing the foregoing features with technical features having similar functions disclosed in the present disclosure (but not limited thereto).

In addition, although the various operations are depicted in a specific order, it should be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Certain features that are described in the context of separate embodiments may also be implemented in combination in a single embodiment. In contrast, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are merely exemplary forms of implementing the claims.

## Claims

1. A data processing unit, DPU-based remote procedure call method, applied to a DPU, wherein the method comprises:
receiving (S301) a data write request sent by a server side to a remote storage side, wherein the data write request comprises data to be written;
obtaining (S302) first metadata according to the data write request, wherein the first metadata comprises a target write address of the data to be written;
caching (S303) the first metadata and the data to be written in a memory of the DPU, and obtaining memory pointer information of the first metadata and the data to be written in the memory; and
transmitting (S304), according to the memory pointer information, the first metadata and the data to be written to a network port in the DPU in a user mode, and transmitting the first metadata and the data to be written to the remote storage side through the network port, to write to the remote storage side.

2. The method according to claim 1, wherein the transmitting (S304), according to the memory pointer information, the first metadata and the data to be written to the network port in the DPU in the user mode comprises:
transmitting the memory pointer information to a user-mode network protocol stack in the DPU; and
transmitting, according to the memory pointer information, the first metadata and the data to be written to the network port in the DPU in the user mode based on the user-mode network protocol stack.

3. The method according to claim 1 or 2, wherein the memory of the DPU is a huge-page memory, and the obtaining (S303) the memory pointer information of the first metadata and the data to be written in the memory comprises:
obtaining, through a page table of the huge-page memory, a physical address of the first metadata and the data to be written in the huge-page memory, and determining the physical address in the huge-page memory as the memory pointer information.

4. The method according to any one of claims 1 to 3, wherein after the transmitting (S304) the first metadata and the data to be written to the remote storage side through the network port, the method further comprises:
receiving a write success notification message from the remote storage side, and clearing the first metadata and the data to be written from the memory.

5. A data processing unit, DPU-based remote procedure call method, applied to a DPU, wherein the method comprises:
receiving (S401) a data read request sent by a server side to a remote storage side, and sending the data read request to the remote storage side through a network port in the DPU, wherein the data read request comprises information about data to be read;
receiving (S402), through the network port, a data packet sent by the remote storage side, and caching the data packet in a memory of the DPU, wherein the data packet comprises second metadata and the data to be read, and the second metadata comprises information about the server side;
obtaining (S403), in a user mode, memory pointer information of the second metadata and the data to be read in the memory; and
transmitting (S404), according to the memory pointer information, the second metadata and the data to be read to the server side.

6. The method according to claim 5, wherein the transmitting (S404), according to the memory pointer information, the second metadata and the data to be read to the server side comprises:
parsing the second metadata according to the memory pointer information, to obtain the information about the server side; and
performing verification according to the information about the server side, and transmitting, according to the memory pointer information, the second metadata and the data to be read to the server side after the verification is passed.

7. The method according to claim 5 or 6, wherein the obtaining (S403), in the user mode, the memory pointer information of the second metadata and the data to be read in the memory comprises:
obtaining, through a user-mode network protocol stack in the DPU, the memory pointer information of the second metadata and the data to be read in the memory from the data packet.

8. The method according to claim 5 or 6, wherein the memory of the DPU is a huge-page memory, and the obtaining (S403), in the user mode, the memory pointer information of the second metadata and the data to be read in the memory comprises:
obtaining, through a page table of the huge-page memory, a physical address of the second metadata and the data to be read in the huge-page memory, and determining the physical address in the huge-page memory as the memory pointer information.

9. The method according to any one of claims 5 to 8, wherein after the transmitting (S404), according to the memory pointer information, the second metadata and the data to be read to the server side, the method further comprises:
receiving a read success notification message from the server side, and clearing the data packet from the memory.

10. An electronic device, comprising: at least one processor and a memory;
wherein the memory stores a computer-executable instruction; and
the at least one processor executes the computer-executable instruction stored in the memory, such that the at least one processor executes the method according to any one of claims 1 to 9.

11. A computer-readable storage medium, wherein a computer-executable instruction is stored in the computer-readable storage medium, and when a processor executes the computer-executable instruction, the method according to any one of claims 1 to 9 is implemented.

## Amended claims

### Amended claims in accordance with Rule 137(2) EPC.

1. A data processing unit, DPU-based remote procedure call method, applied to a DPU, wherein the method is **characterized by** comprising:
receiving (S301) a data write request sent by a server side to a remote storage side, wherein the data write request comprises data to be written;
obtaining (S302) first metadata from the server side and/or an access side of the remote storage side according to the data write request, wherein the first metadata comprises a target write address of the data to be written;
caching (S303) the first metadata and the data to be written in a memory of the DPU, and obtaining memory pointer information of the first metadata and the data to be written in the memory; and
transmitting (S304), according to the memory pointer information, the first metadata and the data to be written to a network port in the DPU in a user mode, and transmitting the first metadata and the data to be written to the remote storage side through the network port, to write to the remote storage side.

2. The method according to claim 1, wherein the transmitting (S304), according to the memory pointer information, the first metadata and the data to be written to the network port in the DPU in the user mode comprises:
transmitting the memory pointer information to a user-mode network protocol stack in the DPU; and
transmitting, according to the memory pointer information, the first metadata and the data to be written to the network port in the DPU in the user mode based on the user-mode network protocol stack.

3. The method according to claim 1 or 2, wherein the memory of the DPU is a huge-page memory, and the obtaining (S303) the memory pointer information of the first metadata and the data to be written in the memory comprises:
obtaining, through a page table of the huge-page memory, a physical address of the first metadata and the data to be written in the huge-page memory, and determining the physical address in the huge-page memory as the memory pointer information.

4. The method according to any one of claims 1 to 3, wherein after the transmitting (S304) the first metadata and the data to be written to the remote storage side through the network port, the method further comprises:
receiving a write success notification message from the remote storage side, and clearing the first metadata and the data to be written from the memory.

5. A data processing unit, DPU-based remote procedure call method, applied to a DPU, wherein the method is **characterized by** comprising:
receiving (S401) a data read request sent by a server side to a remote storage side, and sending the data read request to the remote storage side through a network port in the DPU, wherein the data read request comprises information about data to be read;
receiving (S402), through the network port, a data packet sent by the remote storage side, and caching the data packet in a memory of the DPU, wherein the data packet comprises second metadata and the data to be read, and the second metadata comprises information about the server side;
obtaining (S403), in a user mode, memory pointer information of the second metadata and the data to be read in the memory; and
transmitting (S404), according to the memory pointer information, the second metadata and the data to be read to the server side.

6. The method according to claim 5, wherein the transmitting (S404), according to the memory pointer information, the second metadata and the data to be read to the server side comprises:
parsing the second metadata according to the memory pointer information, to obtain the information about the server side; and
performing verification according to the information about the server side, and transmitting, according to the memory pointer information, the second metadata and the data to be read to the server side after the verification is passed.

7. The method according to claim 5 or 6, wherein the obtaining (S403), in the user mode, the memory pointer information of the second metadata and the data to be read in the memory comprises:
obtaining, through a user-mode network protocol stack in the DPU, the memory pointer information of the second metadata and the data to be read in the memory from the data packet.

8. The method according to claim 5 or 6, wherein the memory of the DPU is a huge-page memory, and the obtaining (S403), in the user mode, the memory pointer information of the second metadata and the data to be read in the memory comprises:
obtaining, through a page table of the huge-page memory, a physical address of the second metadata and the data to be read in the huge-page memory, and determining the physical address in the huge-page memory as the memory pointer information.

9. The method according to any one of claims 5 to 8, wherein after the transmitting (S404), according to the memory pointer information, the second metadata and the data to be read to the server side, the method further comprises:
receiving a read success notification message from the server side, and clearing the data packet from the memory.

10. An electronic device, **characterized by** comprising: at least one processor and a memory;
wherein the memory stores a computer-executable instruction; and
the at least one processor executes the computer-executable instruction stored in the memory, such that the at least one processor executes the method according to any one of claims 1 to 9.

11. A computer-readable storage medium, **characterized in that**, a computer-executable instruction is stored in the computer-readable storage medium, and when a processor executes the computer-executable instruction, the method according to any one of claims 1 to 9 is implemented.
